# EUROPEAN PATENT SPECIFICATION

(11) **EP 3 885 196 B1**
(45) Date of publication and mention of the grant of the patent: **01.07.2026**
(21) Application number: 21174304.2
(22) Date of filing: 02.07.2018
(51) Int. Cl.: B60R 1/062, B60R 1/072

(54) **REARVIEW DEVICE WITH MOVEABLE HEAD ASSEMBLY AND VEHICLE THEREWITH**
RÜCKSPIEGELVORRICHTUNG MIT BEWEGLICHER KOPFANORDNUNG UND FAHRZEUG DAMIT
DISPOSITIF DE RÉTROVISEUR COMPORTANT UN ENSEMBLE À TÊTE MOBILE ET VÉHICULE CORRESPONDANT

(30) Priority: 30.06.2017 DE 102017114746; 15.03.2018 US 201815922366; 24.05.2018 WO PCT/EP2018/063665
(43) Date of publication of application: 29.09.2021
(62) Divisional of application: 18734827.1
(73) Proprietor: SMR Patents S.à.r.l., 2411 Luxembourg (LU)
(72) Inventor: LETTIS, Andrew, Portchester, PO 16 9SD (GB); SCOTT-COLLINS, Callum, Portchester, PO 16 9SD (GB); REHILL, Graham, Portchester, PO 16 9SD (GB)
(74) Representative: Weber-Bruls, Dorothée

(56) References cited:
- WO-A1-2004/009408
- KR-A- 20140 008 555
- US-A1- 2011 141 590
- US-A1- 2013 170 013
- US-A1- 2015 224 930
- US-A1- 2017 267 179
- US-B1- 6 239 928

## Description

The invention relates to a rearview device for a motor vehicle with a moveable head assembly and a vehicle therewith.

Mirrors or rearview means, such as those including a camera pod, are typically exposed to the outside environment when used as a side rearview mirror device secured to the outside of a vehicle and not exposed to the outside when used inside a vehicle as an internal rearview device. Rearview devices are typically made up of many components which require a number of different assembly parts and are complicated and expensive to manufacture. In addition, when exposed to the outside environment, rearview means are subject to dirt or debris entering within the assembly. Still further, while a rearview means may include improved protection from the outside environment such rearview means fail to provide a full and expansive field of view including a wide angle view as may be desired by a driver for viewing the driver's blind spot.

US 2015/224930 A1 teaches an exterior rearview mirror assembly configured for mounting at an exterior portion of a vehicle, said exterior rearview mirror assembly comprising: a mounting arm configured for attachment at an exterior portion of a vehicle equipped with said exterior rearview mirror assembly; a mirror head attached at said mounting arm; an attaching element attached at a mirror reflective element; a shroud extending from said attaching element and partially received in said mirror head; a mirror actuator operable to adjust said attaching element and said mirror reflective element relative to said mirror head, wherein said mirror actuator adjusts said mirror reflective element, said attaching element and said shroud in tandem relative to said mirror head; and wherein said mirror reflective element is disposed outside of said mirror head and said shroud spans a gap between said mirror reflective element and said mirror head to substantially encase said attaching element.

US 2017/267179 A1 refers to a head section for a rear view device for a motor vehicle, comprising: a casing means comprising at least one housing section and a lid section arranged on a side of the housing section which faces away from a driving direction of the motor vehicle; at least one electronic unit arranged in a hollow area formed between the housing section and the lid section; a first rear view means for displaying a first side or rear area of the motor vehicle in relation to the driving direction; and a second rear view means for displaying a second side or rear area of the motor vehicle in relation to the driving direction, wherein the second rear view means is arranged on the lid section, with the lid section and the second rear view means forming a combined, single-piece component, and wherein the lid section comprises a polymeric substrate, which is coated with a chromium-based reflective coating in the region of the combined, single-piece component for providing the second rear view means where the second rear view means is a reflective element.

EP 2 492 145 B1 describes an external rearview mirror with a mirror head and a mirror base, which are covered with at least one body element in the form of a body frame, a body cap and a mirror base cover, and a mirror glass that is installed rigidly relative to the mirror head. The mirror head rests on the mirror base, the body cover of the mirror head is composed of multiple pieces of the body frame and the body cap, and the mirror base is equipped with a mirror base cover, where the body cap has an opening designed for the passage of the mirror base and the mirror base cover. The mirror base is rigidly connected to a mirror carrier that carries an electrical glass adjustment drive, where the glass adjustment drive is connected to at least one body element.

Another external rearview mirror assembly for a motor vehicle includes a mirror base or foot provided for arrangement on the motor vehicle and a mirror head arranged on the mirror foot as well as a mirror glass accommodated in the mirror head and arranged rigidly and fixed non adjustably with respect thereto. Such an external rearview mirror is described in European Patent No. 2 492 144 B1. At least one articulation is provided between the mirror head and the arrangement of the mirror foot on the motor vehicle. The articulation includes a total of two articulation axes, and the direction vectors of the articulation axes are independent of each other. The two articulation axes are associated, jointly and/or independently of each other for swiveling the mirror head from an operating position to a swung-in position and vice versa. The articulation axes are also for swinging-in the mirror head in and against the direction of motion, adjusting an individual adjusting position of the mirror glass by adjusting the mirror head depending on, e.g., the seating position and the height of a driver of the motor vehicle. The mirror has a first adjusting drive driven by an electric motor and associated to a first articulation axis of the two articulation axes and a second adjusting drive driven by an electric motor and associated to a second articulation axis of the two articulation axes.

EP 2 253 510 B1 describes a rearview assembly with a mirror frame, mirror base, mirror housing, mirror glass, and glass actuator assembly. Specifically, it describes a method of improving the connection between components of the rearview assembly by using additional connection means to support a rigid fixture of the bezel at the mirror frame.

EP 1 894 780 A2 describes an open vehicle rear view system comprising: a pair of mirrors for obtaining a rear view, the mirrors being disposed on left and right portions of a vehicle body or a handlebar in front of a driver; wherein mirror housings mounted on the left and right portions of the vehicle body or the handlebar; mirror holders each holding the mirror, and being supported on the mirror housing so that the mirror holder can pivot between a normal view position for obtaining a normal rear view and a changed view position which is changed from the normal view position; actuators each including an electric motor rotatable in forward and reverse directions and a reduction mechanism for reducing output of the electric motor, each actuator being provided between the mirror housing and the mirror holder so as to exert power for pivoting the mirror holder; an operating member operated by the driver in order to select the normal view position or the changed view position of the mirror holders; and a drive control circuit including two pairs of position detection switches which are disposed at fixed positions within the two mirror housings in order to detect the normal view position and the changed view position of the mirror holders and determine a timing for terminating operation of the electric motors, and controlling operation of the electric motors so as to pivot the two mirror holders simultaneously according to operation of the operating member.

US 4,701,037 describes a remote control rear view mirror, comprising: a housing having a mirror receptive opening provided therein and a mounting plate that is received therein and is adapted to be fastened to the inner back wall thereof, a drive motor unit including two separate electrical motors provided on said mounting plate and having means providing a connection to a source of electrical power, a mirror glass supporting frame member having a ball-and-socket connection with said drive motor unit and a drive connection with each of said electrical motors, a retainer ring adapted to be mounted and supported on said mounting plate and to have pivotal support and restrictive engagement with said frame member, said frame member having a rearwardly projected back wall part and said retainer ring including two complementary parts adapted for fitted engagement with said frame member back wall part, said back wall part and said retainer ring parts being formed for spherical surfaced pivotal engagement therebetween and with the same axial center as said ball-and-socket connection, means provided within said ball-and-socket connection and between said back wall and retainer ring parts for restricting and limiting the pivotal movement otherwise afforded thereto and therebetween, said means including a couple of locating pins on said back wall part for complementary engagement with slots in said retainer ring parts, a disc-like member provided on the back wall of said frame member centrally within said rearwardly projecting back wall part and being formed to provide the ball head part of said ball-and-socket connection and with a pair of relatively transversely spaced and flexible screw threaded members extending outwardly therefrom, said disc-like member being provided with tabs extending from the circumference thereof for alignment of said member with recesses in said back wall part, said drive motor unit having the socket joint of said ball-and-socket connecting provided thereon and having the electric motors thereof inclusive of worm gear drive operatively engaged with said screw threaded members on the back wall of said mirror supporting frame member part for providing the drive connection therebetween.

US 2013/170013 describes a vehicular rearview assembly that has a rounded outer perimeter edge to satisfy safety standards and contains an EC element having a complex peripheral ring, a front surface that is fully observable from the front of the assembly, and a user interface with switches and sensors that activate and configure, in cooperation with electronic circuitry of the assembly, pre-defined function(s) or device(s) of the assembly in response to the user input applied to the user interface. A complex peripheral ring may include multiple bands the structures of which is adapted to provide for specified optical characteristics of light, reflected off of the ring. Electrical communications between the electronic circuitry, the mirror element, and the user interface utilize connectors configured to exert a low contact force, onto the mirror element, limited in part by the strength of adhesive affixing the EC element to an element of the housing of the assembly.

WO 2004/009408 A1 describes a vehicular mirror assembly comprising a mirror base adapted to be mounted to a vehicle; a mirror shell mounted to the base and comprising a rearwardly-facing opening; a reflective element mounted within the mirror shell in register with the rearwardly-facing opening; a tilt actuator mounted to at least one of the mirror shell and the base, and to the reflective element for tiltably actuating the reflective element; the improvement comprising: at least one of the mountings between a first component and a second component, the first and second component mountings being between at least one of the base and the minor shell; and the tilt actuator and the at least one of the mirror shell and the base, comprises a snap-fit connection which securely retains the first component to the second component.

US 6,239,928 B1 refers to an extendable exterior rearview mirror assembly comprising: a mounting bracket for mounting to a vehicle; a mirror subassembly having a housing and a reflective element; a clamp; and a support mounted on said mounting bracket for pivotal movement between a normal operating position and a folded position, said support extending laterally outward from said bracket when said mirror assembly is mounted to the vehicle and said support is in said normal operating position and, further, extending into said housing, said clamp being positioned in said housing and mounting said mirror subassembly to said support and permitting selective movement of said mirror subassembly along said support to one of at least two viewing positions, said clamp applying a force to urge frictional engagement between said support and said housing to limit movement of said mirror subassembly along said support until such a force is applied to said mirror subassembly sufficient to overcome said frictional engagement between said support and said housing.

It is the object of the present invention to further develop the known rearview device for a motor vehicle with a moveable head assembly such that it is easy to assemble as well as disassemble and, therefore, enhances serviceability.

This object is solved by the features of claim 1. Preferred embodiments of the rearview device of the present invention are described in claims 2 to 12. The invention also provides a vehicle with at least one rearview device according to the invention according to claim 13.

For the purpose of illustration, certain examples of the invention are shown in the drawings. It should be understood, however, that the invention is not limited to the precise arrangements and instrumentalities shown. The accompanying drawings, which are incorporated in and constitute a part of this specification, illustrate an implementation of system, apparatuses, and methods consistent with the present description and, together with the description, serve to explain advantages and principles consistent with the invention.

Further features, details and advantages of the invention are explained in the appended claims, in the drawings and in the description of a preferred embodiment of the rearview device according to the invention given below.
- FIG. 1: is a diagram illustrating attachment of a motor cradle and a lower case of a rearview device, with turn and snap connectivity according to a first embodiment of the claimed subject matter considering that further aspects of the claimed subject matter are demonstrated in conjunction with one or more or all of the figures 2 to 5.
- FIG. 2: is a diagram illustrating attachment of an actuator assembly and the motor cradle of the rearview device of FIG. 1.
- FIG. 3: is a diagram illustrating attachment of a cradle clamp, the motor cradle, and the actuator assembly of the rearview device of FIG. 1.
- FIG. 4: is a diagram illustrating a cross-section of the cradle clamp at detail A of FIG. 3 after engagement with the motor cradle and the actuator assembly of the rearview device of FIG. 1.
- FIG. 5: is a diagram illustrating a cross-section of the cradle clamp, the motor cradle, and the actuator assembly of the rearview device of FIG. 1, after attachment.
- FIG. 6: is a perspective view of a motor cradle for a rearview device according to a second embodiment of the claimed subject matter considering that further aspects of the claimed subject matter are demonstrated in figure 15a and/or 15b.
- FIG. 7: is a perspective view of the motor cradle of FIG. 6 together with a case frame attached to a base assembly.
- FIG. 8: is a part side view of the motor cradle of FIG. 6 together with a case frame and sealing means, with the motor cradle shown in phantom.
- FIG. 9: is a part cross sectional view of the motor cradle of FIG. 6 together with the case frame and sealing means.
- FIG. 10: is a perspective view of the motor cradle of FIG. 6 together with the case frame, the sealing means and a motor.
- FIG. 11: is a perspective view of the motor cradle of FIG. 6 together with the base assembly, the motor and the sealing means.
- FIG. 12: is a perspective view of the motor cradle of FIG. 6 together with the base assembly, the case frame, the sealing means and harness.
- FIG. 13: is a perspective view of the motor cradle of FIG. 6 together with the base assembly, the motor, the sealing means and the harness.
- FIG. 14: is a perspective part view of the motor cradle of FIG. 6 together with the motor and the harness.
- FIGs. 15a and 15b: are perspective views of the motor cradle of FIG. 6 together with the case frame, the motor, a lower case and a cradle clamp, prior and after closure, respectively.
- FIGs. 16a and 16b: are perspective part views corresponding to enlargements of FIG. 15a and 15b.
- FIG. 17: is a perspective view of the motor cradle of FIG. 6 together with the base assembly, the lower case, the motor, the cradle clamp, a turn signal indicator module and a bezel assembly carrying reflective element.
- FIG. 18: is a perspective view of the motor cradle of FIG. 6 within a head assembly.

Throughout the drawings and the detailed description, unless otherwise described, the same drawing reference numerals will be understood to refer to the same elements, features, and structures. The relative size and depiction of these elements may be exaggerated for clarity, illustration, and convenience.

The following detailed description is provided to assist the reader in gaining a comprehensive understanding of the methods, apparatuses, and/or systems described herein. Accordingly, various changes, modifications, and equivalents of the systems, apparatuses and/or methods described herein will be suggested to those of ordinary skill in the art. Also, descriptions of well-known functions and constructions may be omitted for increased clarity and conciseness.

The term "rearview" is here defined as a view of the surrounding area, which is not in the field of view of the driver, i.e. the directions opposing, left, right, below and above of the viewing direction, but can also comprise the view in the direction of the viewing direction of the driver and/or any combinations of the directions.

The term "driver" and "driver of the vehicle" relates here to the person controlling the main parameters of the vehicle, such as for example direction, speed and/or altitude, e.g. normally the person located in the location specified for the controlling person, for example a seat, but can also relate to any other person or entity within or outside of the vehicle.

In addition, it is to be understood that the phraseology and terminology employed herein are for the purpose of description and should not be regarded as limiting. For example, the use of a singular term, such as, "a" is not intended as limiting of the number of items. Also the use of relational terms, such as but not limited to, "top," "bottom," "left," "right," "upper," "lower," "down," "up," "side," are used in the description for clarity and are not intended to limit the scope of the invention or the appended claims. Further, it should be understood that any one of the features can be used separately or in combination with other features. Other systems, methods, features, and advantages of the invention will be or become apparent to one with skill in the art upon examination of the detailed description. It is intended that all such additional systems, methods, features, and advantages be included within this description, be within the scope of the present invention, and be protected by the accompanying claims.

A rearview device comprises a base assembly and a head assembly, with the head assembly being moveable relative to the base assembly to be attached to a vehicle. The base assembly comprises a base frame, and the head assembly comprises a motor cradle, a case frame, an actuator assembly, a cradle clamp, several covers, seal elements, wires, light and/or sensor modules and at least one rearview means in form of a reflective element and/or camera. The motor cradle acts as main backbone of rearview device as it locates and provides structure and allows attachment of a plurality of parts, in particular when mounted to tool/jig to facilitate assembly. In the following embodiments of said motor cradle will be described.

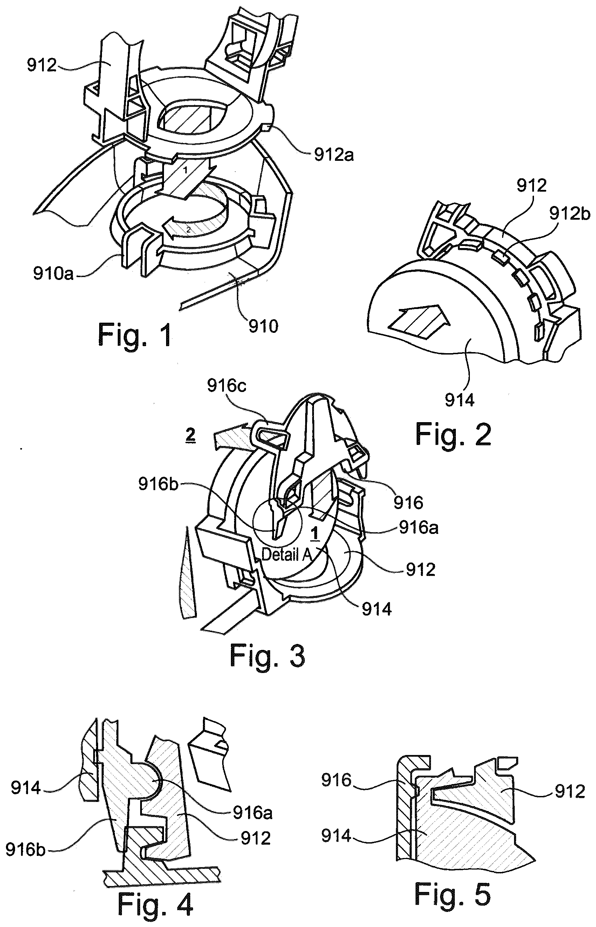

Referring to FIG. 1, a quick assembly rearview device is illustrated which includes a motor cradle 912 and a lower case 910. The motor cradle 912 is attached to the lower case 910 and configured to receive an actuator assembly which is described in more detail below. The attachment mechanism is a quick and easy attachment mechanism requiring a first step of placing the motor cradle 912 above and on top of the lower case 910 as shown by the large down arrow. A second step involves turning the motor cradle 912 so that cradle projections 912a of the motor cradle 912 engage tab vertical fixation lugs 910a of the lower case 910. This is referred to as turn and snap connectivity.

The assembly as described herein allows both the motor cradle 912 and the lower case 910 to be fixed and located around a central axis (pivot axis) and onto a common plane. This will reduce the tolerance stack back to the motor rotation center and components.

FIG. 2 is a diagram illustrating attachment of an actuator assembly 914 to the motor cradle 912 of the rearview device of FIG. 1. The actuator assembly 914 is configured to actuate the movement of the rearview device in accordance with the examples described throughout this application. The actuator assembly 914 is configured to easily and quickly attach to the motor cradle 912 by pushing the actuator assembly 914 in a receiving portion of the motor cradle 912 and engaging cradle teeth 912b into corresponding gaps between teeth (not shown) of the actuator assembly 914. Thus, the cradle teeth 912b fit in gaps between teeth (not shown) of the actuator assembly 914, and the teeth (not shown) of the actuator assembly 914 fit in between the gaps between the cradle teeth 912b.

Such an attachment prevents rotation of the actuator assembly 914 in the motor cradle 912. Small clips may also be used to keep the actuator assembly 914 fixed with respect to the motor cradle 912 before a cradle clamp 916, described below, is fitted.

FIG. 3 is a diagram illustrating attachment of a cradle clamp 916 to the motor cradle 912 and the actuator assembly 914 of the rearview device of FIG. 1. The cradle clamp 916 may be attached to the motor cradle 912 and the actuator assembly 914 to clamp the actuator assembly 914 to the motor cradle 912. The cradle clamp 916 should first slide between the actuator assembly 914 and a front portion of the motor cradle 912, as illustrated by the down arrow in FIG. 3. This results in clamp prong 916b and clamp cam 916a engaging the front portion of motor cradle 912. This engagement is described in more detail with reference to FIG. 4. Subsequently, the cradle clamp 916 should be rotated towards the actuator assembly 914 until clamp clips 916c are engaged with corresponding retaining projections (not shown) on the motor cradle 912. This also causes rotation of the clamp prong 916b and clamp cam 916a until the clamp clips 916c are engaged and the actuator assembly 914 is clamped to the motor cradle 912.

FIG. 4 is a diagram illustrating a cross-section of the cradle clamp 916 at detail A of FIG. 3 after engagement with the motor cradle 912 and the actuator assembly 914 of the rearview device of FIG. 1. The clamp cam 916a may be a curved projection with a corresponding receiving portion on the motor cradle 912 to allow rotation of the cradle clamp 916. This allows rotating the cradle clamp 916 shut until the clamp clips 916c are clipped onto the motor cradle 912 from the top. Clamping pressure may be tuned to provide increased loading.

FIG. 5 is a diagram illustrating a cross-section of the cradle clamp 916, the motor cradle 912, and the actuator assembly 914 of the rearview device of FIG. 1 after attachment. In fact, after assembly of the cradle clamp 916, the motor cradle 912, and the actuator assembly 914, all three components of the rearview device are securely attached. Once the actuator assembly 914 is located and the cradle clamp 916 is engaged, the motor cradle 912 and an adapter ring of the actuator assembly 914 combine to improve stiffness, as

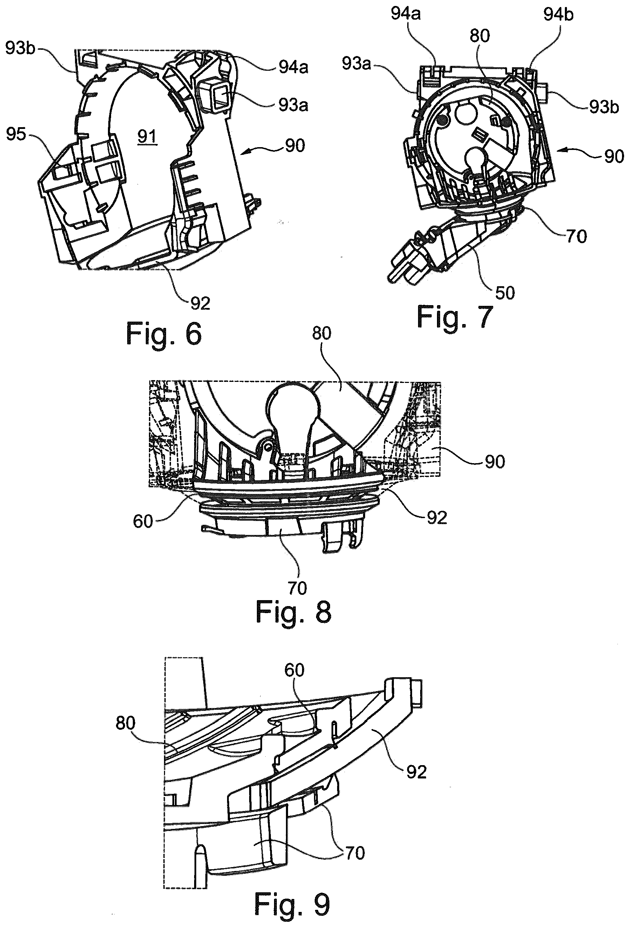

Figure 6 depicts the backbone in form of a cradle 90. The cradle 90 provides a motor opening 91 for the attachment of a motor, a base seat 92 in order to be attached to a base assembly, tool openings 93a, 93b in order to attach the cradle 90 to a jig like light tool to facilitate assembly of the rearview device, openings 94a, 94b for attaching a bezel assembly and harness and a clamp element 95 for embracing a clamp cradle. The following Figures 7 to 18 will further illuminate the different functions of the cradle 90.

As can be seen from Figure 7, the cradle 90 can be placed with its seat 92 on a base assembly 50 with sealing means 70 being arranged there between and a case frame 80 being attached to the base frame 50 and thereby attaching the cradle 90 to the base assembly 50.

Figure 8 demonstrates a pivot joint system acting between the base assembly 50 and the case frame 80, with the cradle 90 being arranged between the base assembly 50 and the case frame 80, surrounded on each side of its seat 92 by sealing means 60, 70. Said pivot joint system corresponds substantially to the one described in detail in the international patent application PCT/EP 2018/063665, to which reference is made in this respect.

Each sealing element 60, 70 is provided as a two component gasket with a hart part and a soft part. The hard part serves for attachment and the soft part for compensating tolerances. Figure 9 shows the pivot joint system in more detail with respect to the relative arrangement of the two sealing means 60, 70 on both sides of the base seat 92 of the cradle 90.

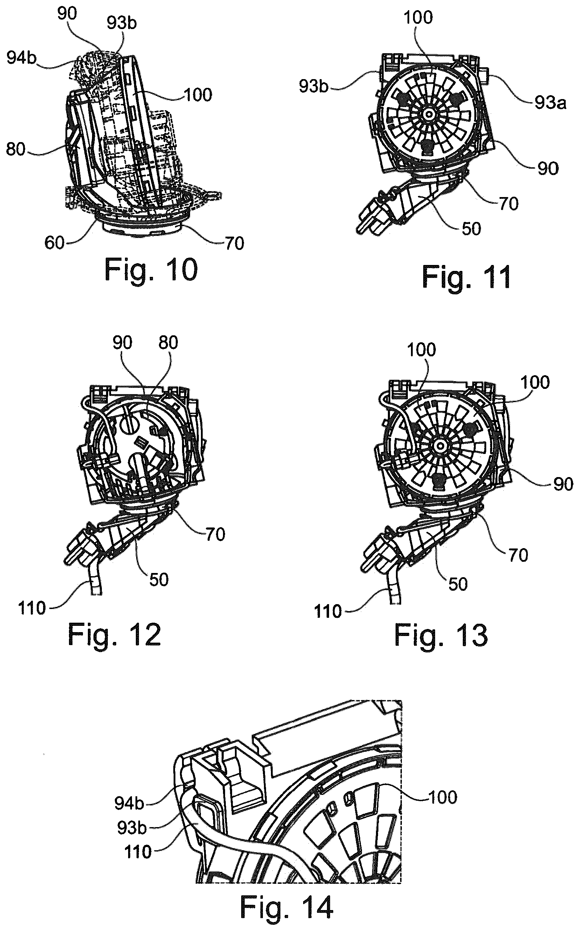

Turning now to Figure 10, the same illustrates the main components of the head assembly, namely in form of the sub-assembly of the case frame 80, the motor cradle 90 and the sealing means 60, 70 described with reference to Figures 8 and 9, together with a motor 100 of an actuator assembly being attached to the motor cradle 90 and extending through the motor opening 91. The respective attachment is well known in the prior art.

The sub assembly of Figure 10 is shown in a different perspective view in Figure 11 as well. Figure 12 shows the sub assembly of Figure 11 without the motor 100, but with harness 110, whereas Figure 13 also shows the motor 100.

From the enlargement of Figure 14 it can be seen that the harness 110 is hold within the opening 94b of the cradle 90. In fact, as shown in Figures 12 and 13, the harness 110 passes through both openings 94a, 94b of the cradle 90.

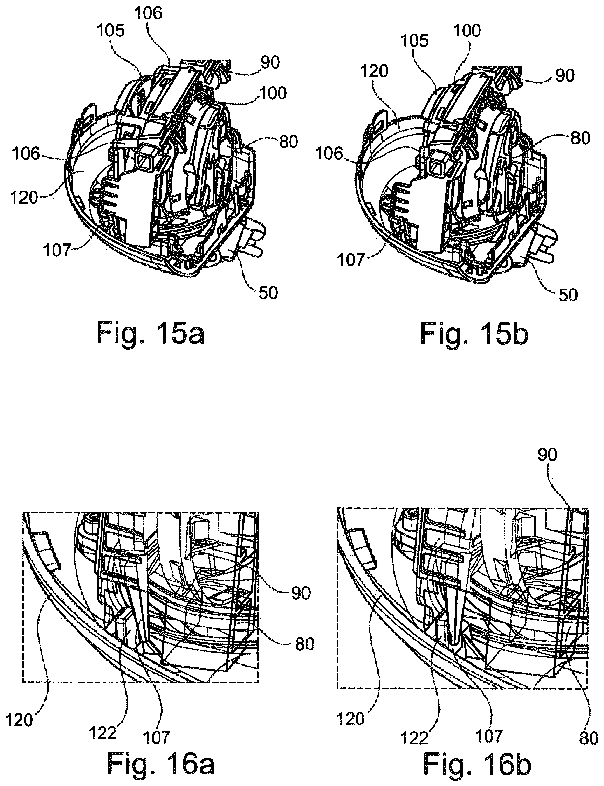

With respect to Figures 15a and 15b, the attachment of a motor clamp 105 is demonstrated, with Figure 15a showing the motor clamp 105 after being pushed into the space between the motor cradle 90 and a case lower 120, whereas Figure 15b shows the motor clamp 105 after being rotated to attach clips 106 to the motor 100. The clips 106 are provided at the upper end of the motor clamp 105, whereas at the lower end clamps prongs 107 are provided.

Figures 16a and 16b demonstrate the position of the clamp prongs 107 after the motor clamp 105 has been pushed between the motor cradle 90 and the case lower 120, see Figure 16a and after the motor clamp 105 has been rotated for the clip connection with the motor 110, forcing the clamp prong 107 to push against a case projection 122 of the lower case 120, and, thereby, securing the attachment, see Figur 16b.

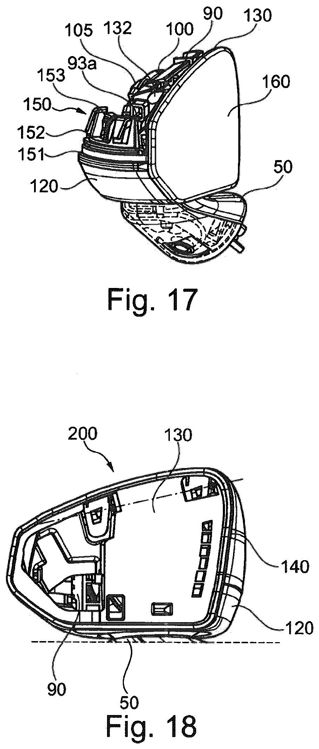

Figure 17 shows the rearview device sub-assembly of Figure 15a and 15b with a bezel assembly 130 carrying a reflective element 160 and a turn signal indicator module 150 being attached.

The bezel assembly 130 is provided with an axle 132 to be inserted into the openings 94a and 94b of the cradle 90, thereby fixing the arrangement of the harness 110 in the openings 94a, 94b by closing the respective openings. Still further, the attachment of the axle 132 within the openings 94a, 94b provides a hinge connection enabling the bezel assembly 130 to be entered from above into the openings 94a, 94b with its axle 132 and to be downwardly rotated to attach the bezel assembly 130 to the lower case 120 via a snap connection. The respective attachment of the bezel assembly 130 is described in further detail in the German patent application DE 10 2017 114 746, to which reference is made in this respect.

To finalize the head assembly 200, an upper case 140 is to be attached to the lower case 120 via the turn signal indicator module 150 as well as to the bezel assembly 130, see Figure 18. The turn signal indicator module 150, as can be best seen in Figure 17, comprises a light window 151 and a housing 152 providing clips elements 153 for the attachment to the lower case 120 as well as the upper case 140.

The assembly described above is facilitated by attaching the motor cradle 90 to a not shown jig, namely by inserting projections of the jig into the tool openings 93a, 93b being arranged at the upper end of the motor cradle 90 next to the openings 94a, 94b. As the tool openings 93a, 93b are aligned to each other a rotational axis is defined therewith and allows to rotate the motor cradle 90 with the help of the jig in order to easily attach the different parts of the head assembly to the motor cradle 90. For facilitating the respective rotation, the rotation axis defined by the tool openings 93a, 93b is inclined with respect to the pivot axis of a joint system. As the base seat 92 of the motor cradle 90 has a partly spherical shape being concentrically arranged relative to the pivot axis of the pivot joint system, the base seat 92 seems to be inclined with respect to the upper edge of the cradle 90 running in parallel to the rotational axis through the tool openings 93a, 93b, as can be best seen in Figure 6.

The sequence of attaching the different rearview device parts to the motor cradle 90 as well as the angle of rotation of the motor cradle 90 to facilitate the respective attachment lies within the knowledge of a skilled person and might be varied depending on individual preferences.

Different functions and devices can be incorporated into and/or controlled with the help of rearview devices including especially also cameras.

Especially useful are functions and devices to enhance, extend and/or sustain the functionality of the rearview device during normal or extreme conditions. This may include heating and/or cooling means, cleaning means such as wipers, liquid and/or gaseous sprays, actuator means for moving the rearview device or parts of it, such as for example a display, a camera system and/or parts of a camera system, including for example lenses, filters, light sources, adaptive optics like deformable mirrors, sensors and/or mirrors, and/or actuator means for inducing movement of other objects, for example parts of the vehicle and/or objects surrounding the vehicle. Furthermore it can include linear tracks and/or rotating wheels, like for example a filter wheel, for exchanging optical elements, including for example lenses, mirrors, light sources, sensors, adaptive optics like deformable mirrors and/or filters.

Prominent examples for functions and devices incorporated into and/or controlled with the help of rearview devices include also illumination devices, for example any kind of light module like an external light module, an internal light module, a front light, a back light, a fog light, a brake light, an acceleration light, a turn signal, a logo lamp, a puddle light, a flash light, a navigation light, a position light, an emergency light, a spotlight, a green light, a red light, a warning light, a turn signal light module, an approach light, a search light, an information light, a display and/or any combination thereof.

Further examples for functions and devices incorporated into and/or controlled with the help of rearview devices may include for example a tiredness detection system, a microsleep detection system, a distance and/or velocity determination system, for example a LIDAR (Light detection and ranging) system, a blind spot indicator system, a lane change assistant system, a navigation assistant system, a tracking assistant system, a human-machine interaction system, a machine-machine interaction system, an emergency and precaution assistant system, like an accident avoiding assistant system, a counter-measures assistant system, a brake assistant system, a steering assistant system, an acceleration assistant system, an escape assistant system, including for example an ejection seat system, a direction indicator, a blind spot indicator, an approach system, a strong braking system, an emergency braking system, a charging status indicator, a vehicle mode system, including for example a sports mode system, an economy mode system, an autonomous drive mode system, a sleep mode system and an anti-theft system, a vehicle locked indicator system, a vehicle stolen indicator, a warning signal system, a temperature indicator system, a weather indicator system, a traffic light signal system, a fuel status system and/or any combination thereof.

An example for a rearview device including an illumination device fulfilling the brake light functions is disclosed in German patent application No. 102012108488, filed on September 11, 2012 for REARVIEW ASSEMBLY FOR MOTOR VEHICLE. A light guidance unit for an illumination device used in a back vision system is disclosed in German patent application No. 102012104529, filed on May 25, 2012 for LIGHT GUIDANCE UNIT. An illumination device for a rearview device is disclosed in German patent application No. 102012107833, filed on August 24, 2012 for ILLUMINATION DEVICE AND REARVIEW DEVICE. A lighting device for a back-vision unit is disclosed in German patent application No. 102012107834, filed on August 24, 2012 for LIGHTING DEVICE AND BACK-VISION UNIT. A housing and display device of a rearview device is disclosed in European patent No. 2738043, filed on December 3, 2012 for HOUSING AND DISPLAY DEVICE. An optical light guide for a vehicle lighting unit is disclosed in European patent No. 2947378, filed on May 22, 2014 for OPTICAL LIGHT GUIDE FOR A VEHICLE LIGHTING UNIT. A display device of a rearview device of a vehicle is disclosed in International patent application No. 2015/173695, filed on May 7, 2015 for DISPLAY DEVICE, REARVIEW DEVICE AND MOTOR VEHICLE and claiming priority to European patent application No. 2944866, filed on May 12, 2014 for OPTICAL UNIT, DISPLAY DEVICE, REARVIEW DEVICE AND MOTOR VEHICLE INCLUDING THE SAME. Further a light guiding device for an illumination device, in particular for a motor vehicle or a display device, in a rearview device of a motor vehicle is disclosed in European patent application No. 3045944, filed on January 19, 2015 for LIGHT GUIDING DEVICE. Still further a light guiding device for an illumination device, especially for a motor vehicle or an indicator device in a rearview device of a motor vehicle is disclosed in U.S. patent application No. 15/228,566, filed on August 4, 2016, for LIGHT GUIDING DEVICE and is a continuation-in-part of U.S. patent application No. 15/000,733, filed on January 19, 2016 for LIGHT GUIDING DEVICE. In addition, an illumination device, particularly for a rear-view device of a motor vehicle and a method for producing the same are disclosed in International patent application No. 2016/147154, filed on March 18, 2016 for ILLUMINATION DEVICE AND METHOD FOR PRODUCING AN ILLUMINATION DEVICE and claiming priority to German patent application No. 102015104163, filed on March 19, 2015 for ILLUMINATION DEVICE AND METHOD FOR PRODUCING AN ILLUMINATION DEVICE. An improved rear-view device for a motor vehicle which includes an electronic device is disclosed in U.S. patent application No. 15/256,532, filed on September 3, 2016 for ELECTRONIC DEVICE AND REAR-VIEW DEVICE and claiming priority to European patent application No. 3139711, filed on September 3, 2015 for ELECTRONIC DEVICE AND REARVIEW DEVICE. A lighting device for a rearview device or a footwell device of a vehicle, including at least one luminous means is disclosed in German patent application No. 102015115555, filed on September 9, 2015 for ILLUMINATION DEVICE, REARVIEW DEVICE, FOOTWELL DEVICE AND VEHICLE. A light module for a light assembly of an exterior rearview device is disclosed in European patent application No. 3138734, filed on September 3, 2015 for LIGHT MODULE, LIGHT ASSEMBLY AND REARVIEW DEVICE FOR A VEHICLE. A lighting device for a vehicle component, in particular for a rearview device of a motor vehicle, including a logo lamp and a deflection mirror are disclosed in European patent application No. 3144183, filed on September 13, 2016 for LIGHTING DEVICE, VEHICLE COMPONENT AND VEHICLE and claiming priority to German utility patent application No. 202015104894, filed on September 15, 2015 for LIGHTING DEVICE, VEHICLE COMPONENT AND VEHICLE.

A camera module can include in particular a plurality of different optical elements, including a.o. a variety of sensors and light sources, as well as housing parts.

The housing of a camera module can be made out of plastic, metal, glass, any other suitable material and/or any combinations thereof and can be used in combination with the techniques described below to change or modify the properties of the material or the material surface. Housings are for example described in German patent application No. 102016108247.3, filed on May 3, 2016 for CLEANING SYSTEM FOR A CAMERA and U.S. patent application No. 15/281,780, filed September 30, 2016 for TELESCOPING REARVIEW ASSEMBLY WITH CAMERA AND LENS WIPING SYSTEM.

The camera can include for example CCD or CMOS or light field sensors, as for example described in German patent application No. 102011053999, filed September 28, 2011 for DETECTION SYSTEM FOR OPTICAL DETECTION OF OBJECT AND/OR REGION OF SPACE FOR DRIVER ASSISTANCE AND/OR DISPLAY SYSTEMS OF MOTOR VEHICLE, HAS OPTICAL SENSOR ARRANGED AS LIGHT FIELD SENSOR FOR DETECTION and U.S. patent application No. 09/771,140, filed on January 26, 2001 for MONITORING DEVICE FOR VEHICLES, IN PARTICULAR, MOTOR VEHICLES, now U.S. patent No. 6,703,925. Also an area of the sensor can be reserved for different purposes, for example to detect a test beam, as described in U.S. patent No. 8,031,224, filed on September 9, 2014 for CAMERA SYSTEM, METHOD FOR OPERATION OF A CAMERA SYSTEM AND SENSOR DEVICE OF A CAMERA SYSTEM.

The optical elements can be molded or formed from any type of glass or any other suitable material. Glass is here used in the meaning of a non-crystalline amorphous solid showing a glass transition when heated towards the liquid state. It includes for example the group of polymeric glasses, metallic glasses, silica glasses, but any other suitable material showing the glass transition can also be used. The glass can be either in a flat, wedge, rectangular, cylindrical, spherical, conical, elliptical, and/or circular shape, as described for example in German patent application No. 102016108247.3, and German patent application No. 102011103200, filed on May 31, 2011 for LIGHT WINDOW FOR USE AS LIGHT CONDUCTOR FOR TURN INDICATOR IN OUTSIDE MIRROR ARRANGEMENT OF VEHICLE, HAS UNCOUPLING STRUCTURES AT CERTAIN LOCATION OF WINDOW, AND OPTICAL FILM WITH MOLDED COATING AND PROVIDED WITH UNCOUPLING STRUCTURES, or have a shape according to different needs or lens types. As non-limiting examples camera modules can be equipped with lenses, like a wide-angle or fish-eye lens suitable to provide peripheral images, as described in U.S. patent application No. 15/281,780, and U.S. patent application No. 13/090,127, filed on April 19, 2011 for REARVIEW MIRROR SIMULATION, now U.S. patent No. 9,238,434, a Fresnel lens or micro lenses as described in German patent application No. 102011053999, filed September 28, 2011 for DETECTION SYSTEM FOR OPTICAL DETECTION OF OBJECT AND/OR REGION OF SPACE FOR DRIVER ASSISTANCE AND/OR DISPLAY SYSTEMS OF MOTOR VEHICLE, HAS OPTICAL SENSOR ARRANGED AS LIGHT FIELD SENSOR FOR DETECTION, and a TIR (total internal reflection) lens as described in U.S. patent No. 8,740,427, filed September 8, 2010 for OPTIMAL LIGHT COUPLING FOR REARVIEW DEVICES. Another type of optical elements know to be used in camera modules are optical fibers, especially in form of fiber bundles and preferably in form of fiber bundles having an optical head, as described for example in U.S. patent application No. 09/771,140. Different methods can be used to produce such optical elements, for example as described in U.S. patent 8,460,060, filed on January 30, 2009 for METHOD FOR CREATING A COMPLEX SURFACE ON A SUBSTRATE OF GLASS.

The optical elements can be transparent as described for example in U.S. patent No. 8,031,224, German patent application No. 102016108247.3, and U.S. patent application No. 13/242,829, filed September 23, 2011 for CAMERA ARRANGEMENT AND DOOR HANDLE FOR MOTOR VEHICLE. But the optical elements can also be semitransparent, as described in U.S. patent application No. 09/771,140 and U.S. patent application No. 13/090,127. Still further, the optical elements can be completely or partially coated with different type of coatings to realize different effects, such as for example anti-reflective coatings as described in U.S. patent No. 8,031,224, chromium-based reflective coatings as described in U.S. patent No. 9,181,616, filed on January 24, 2012 for CHROMIUM-BASED REFLECTIVE COATING, and other coatings, for example for polymeric substrates as described in U.S. patent application No. 14/936,024, filed on Nov. 9, 2015 for COATED POLYMERIC SUBSTRATES and in U.S. patent application No. 15/124,310, filed on Feb. 20, 2015 for DECORATIVE COATINGS FOR PLASTIC SUBSTRATES. Preferably the optical elements are made of a scratch-proof material as described for example in German patent application No. 102016108247.3. The optical elements can have uncoupling structures at certain locations of the optical elements, and an optical film, for example an extrusion film, and a molded coating can be applied as described in German patent application No. 102011103200. A coating to spectrally and stress control is described in U.S. patent application No. 15/124,310. Different filters can be integrated into the optical elements such as for example gray filters or polarization filters, described in U.S. patent application No. 14/809,509, filed July 27, 2015 for APPARATUS FOR LIGHT INTENSITY ADJUSTMENT.

Electrochromic substrates, polymer electrolytes and other charge conducting medias may be used for the optical elements based on the descriptions of European patent application No. 08103179.1, filed on March 31, 2008 for PROCESS FOR PRODUCING ELECTROCHROMIC SUBSTRATES AND ELECTROCHROMIC ARTICLES MADE THEREFROM, European patent No. 2202826, filed on December 23, 2008 for POLYMER ELECTROLYTES AND DEVICES CONTAINING, U.S. patent No. 7,999,992, filed on January 7, 2005 for CHARGE CONDUCTING MEDIUM and U.S. patent No. 8,537,451, filed on March 26, 2008 for PROCESSES FOR PRODUCING ELECTROCHROMIC SUBSTRATES AND ELECTROCHROMIC ARTICLES MADE THEREFROM.

The camera module can also be equipped with apparatuses for light intensity adjustment as described for example in U.S. patent application No. 14/809,509 and light level intensifier tubes as described in U.S. patent application No. 09/771,140. The electrochromic substrates and devices used in European patent application No. 08103179.1, European patent No. 2202826, U.S. patent No. 7,999,992 and U.S. patent No. 8,537,451 can also be used for this purpose as well as a transflector to transmit or reflect light based on a corresponding input signal, as described in German patent application No. 102016106126.3, filed on April 4, 2016 for IMAGING SYSTEM.

The camera module or a cover adapted to the camera module can be moved using different actuators, drives and/or a flexible track, as for example described in German application No. 102016108247.3 and U.S. patent application No. 15/281,780.

Still further, the camera module can also include cleaning elements to clean the optical element facing outwards and being exposed to the environment. The cleaning element can for example include wipers, brushes, lips, nozzles, fans and similar elements as are described in European patent application No. 14165197.6, filed April 17, 2014 for OPTICAL SYSTEM FOR A VEHICLE, CLEANING DEVICE AND VEHICLE COMPRISING AN OPTICAL SYSTEM, U.S. patent application No. 15/281,780, German patent application No. 102016108247.3, European patent application No. 13163677.1, filed April 15, 2013 for LENS WIPER, European patent application No. 15173201.3, filed June 22, 2015 for LENS CLEANING WITH FLEXIBLE ACTUATOR and European patent No. 1673260, filed on October 14, 2003 for CLEANING DEVICE. The cleaning devices are not limited in composition, and may for example include any fabric, elastomeric, sponge, brush, or combination of these. Special wiper elements including wiper arms, wiper blades, wiping cloth, wiping tissue and combinations thereof are described in European patent application No. 14165197.6. A wiper element may for example be controlled according to the method described in European patent application No. 130164250.6 , filed April 18, 2013 for METHOD FOR CONTROLLING A WIPER DEVICE. A reservoir for holding a cleaning liquid as described in European patent application No. 14165197.6. Such a reservoir can be attached to or integrated into the camera module to provide the cleaning liquid to the optical elements of the camera module.

Different methods may be used to detect dirt or other obscurations preventing or reducing the functioning of the camera module, such as described in U.S. patent No. 8,395,514, filed on June 24, 2008 for OPTICAL SYSTEM AND METHOD FOR DETECTING OPTICAL SYSTEM OBSCURATION IN A VEHICLE, European patent No. 1328141, filed on January 12, for ASSEMBLY HAVING A CONDUCTOR FROM FLEXIBLE MATERIAL AND METHOD FOR MANUFACTURING SUCH AN ASSEMBLY, and U.S. patent No. 8,031,224.

Also light sources can be installed or integrated into the camera module to increase the visibility of surrounding objects, measure distances and directions and detect dirt, such as described in U.S. patent No. 8,031,224, U.S. patent application No. 62/470,658, filed on March 13, 2017, 2016 for LIGHT EMITTING MIRROR BEZEL and U.S. patent application No. 09/771,140.

Different heating means, like heating coils, heating devices integrated into the lens holder or the bezel, or other heating elements can be used to impede condensation and icing at the surface of optical elements, as for example described in German patent application No. 102016108247.3, U.S. patent application No. 62/470,658, and German patent application No. 102016107545.0, filed on April 22, 2016 for HEATING DEVICE FOR A CAMERA LENS.

A watertight seal against weather effects, as well as against the influence of washing processes with detergents, solvents and high pressure cleaners can be used on the housing of the camera module as described in U.S. patent application No. 13/090,127.

In another example, the housing can be made of a body including plastic and conductive material, wherein the conductive material is dispersed in the plastic material to form a conductive mass to allow a power source, preferably a DC voltage source, to connect via at least two electrodes to the body and heat the body accordingly, as described in German patent application No. 102016107545.0.

A conductor track can be embedded within plastic parts of the camera module as described in European patent No. 1328141 and U.S. patent No. 7,083,311, filed on January 12, 2002 for CONDUCTOR OF FLEXIBLE MATERIAL, COMPONENT COMPRISING SUCH FLEXIBLE CONDUCTOR, AND METHOD OF MANUFACTURING SUCH CONDUCTOR.

The camera module can include a power harvesting system as described for example in European patent application No. 09171683.7, filed on Sept. 29, 2009 for SELF SUSTAINING REARVIEW MIRROR.

A fault detection system for electric consumers as described in U.S. patent No. 8,487,633 filed on January 14, 2010 for FAULT DETECTION OF ELECTRIC CONSUMERS IN MOTOR VEHICLES, can be used to detect failure of the camera module.

Different types of fixings can be used to fix the camera module to the vehicle or other components, such as for example the snap-fit connection described in European patent No. 2233360, filed on March 27, 2009 for SNAP FIT CONNECTION IN A REARVIEW MIRROR.

Different control means and analyzing devices can be used, such as the computation units described in U.S. patent application No. 13/090,127, German patent application No. 102016106126.3, German patent application No. 102011053999, European patent No. 2146325, filed on July 16, for Recording Device for Receiving, Processing and Storing Image Files in a Vehicle and Method, and U.S. patent No. 8,849,104, filed on July 16, 2008 for RECORDING DEVICE AND METHOD FOR CAPTURING AND PROCESSING IMAGE DATA IN A VEHICLE. In addition, HDR (high dynamical range) technology can be used according to U.S. patent application No. 14/830,406, filed on Aug. 19, 2015 for REARVIEW DEVICE FOR A MOTOR and published as US 20150358590.

### Reference Signs

- 50: base assembly
- 60: sealing means
- 70: sealing means
- 80: case frame
- 90: motor cradle
- 91: motor opening
- 92: base seat
- 93a: tool opening
- 93b: tool opening
- 94a: opening
- 94b: opening
- 95: clamp element
- 100: motor
- 105: cradle clamp
- 106: clamp clips
- 107: clamp prong
- 110: harness
- 120: lower case
- 122: case projection
- 130: bezel assembly
- 132: axle
- 140: upper case
- 150: turn signal indicator module
- 151: light window
- 152: housing
- 153: clips element
- 160: reflective element
- 200: head assembly
- 910: lower case
- 910a: vertical fixation lugs
- 912: motor cradle
- 912a: cradle projections
- 912b: cradle teeth
- 914: actuator assembly
- 916: cradle clamp
- 916a: clamp cam
- 916b: clamp prong
- 916c: clamp clip

## Claims

1. A rearview device for a vehicle, comprising:
a moveable head assembly (200);
a lower case (120, 910);
a base assembly (50) to be fixed to the vehicle;
an actuator assembly (100, 914); and
a cradle (90, 912) configured to attach the actuator assembly (100, 914) to the moveable head assembly (200),
wherein
the rearview device further comprises a cradle clamp (105, 916) configured to clamp the actuator assembly (100, 914) to the cradle (90, 912), wherein
i) either the cradle clamp (105) comprises
• one or more clamp recesses configured to be engaged by one or more clamp elements (95) of the cradle (90),
• clamp prongs (107) configured to be received by a space formed between the actuator assembly (100) and the lower case (120), and
• clamp clips (106) configured to clip on to corresponding features of the cradle (90, 912),
such that the cradle clamp (105) is positioned and/or locked by the clamp prongs (107) at its lower end when clamping the clamp clips (106) at its upper end onto the actuator assembly (100),
ii) or the cradle clamp (916) comprises
• one or more clamp cams (916a) configured to be received by a space formed between the actuator assembly (914) and the cradle (912),
• clamp prongs (916b) configured to be received by a space formed between the actuator assembly (914) and the cradle (912),
• clamp clips (916c) configured to clip on to corresponding features of the cradle (90, 912),
such that the cradle clamp (916) is positioned and/or locked by the clamp prongs (916b) at its lower end when clamping the clamp clips (916c) at its upper end onto the actuator assembly (914).

2. The rearview device of claim 1, wherein
with the clamp prongs (916b) being configured to be received by a space formed between the actuator assembly (914) and the cradle (912), the cradle (912) comprises one or more cradle projections (912a), which are suited to be engaged by one or more vertical fixation lugs (910a) of the lower case (910) of the head assembly in response to the cradle (912) being attached to the lower case (910), and/or
the cradle (912) is configured to attach to the lower case (910) using a turn and snap connectivity.

3. The rearview device of claim 2, wherein
the cradle (912) comprises one or more cradle teeth (912b) and the one or more cradle teeth (912b) are configured to engage one or more corresponding gaps formed in a ring of the actuator assembly (914).

4. The rearview device of any one of the claims 1 to 3, wherein
with the clamp prongs (107) being configured to be received by a space formed between the actuator assembly (100) and the lower case (120),
the cradle (90) comprises one or more clips for grapping the actuator assembly (80) and/or one or more tabs for locking the actuator assembly (80) to the cradle (90).

5. The rearview device of claim 4, wherein
the, preferably ramped, clamp prongs (107) are adapted to be pushed into a space between the cradle (90) and the lower case (120), with preferably at least one clamp prongs (107) on each side of the motor, and to be rotated when the clamp clips (106) are attached to the motor, with preferably at least one clamp clips (106) on each side of the motor, so that each clamp prong (107) push against a projection (122) of the lower case (120), with preferably at least one projection (122) on each side of the motor.

6. The rearview device of claim 4 or 5, further comprising
a bezel assembly (130),
with preferably a hinge connection being provided between the bezel assembly (130) and the cradle (90) to allow for a rotation of the bezel assembly (90) relative to the cradle (90), and/or with preferably at least one snap, latch and/or clip connection being provided between the bezel assembly (130) and the lower case (120).

7. The rearview device of claim 6, wherein
the hinge connection is provided between an upper end of the bezel assembly (130) and an upper end of the cradle (90) to allow for a downward rotation of the bezel assembly (130) to attach the bezel assembly (130) to the lower case (120) via the at least one snap, latch and/or clip connection.

8. The rearview device of any one of the claims 4 to 7, wherein
the cradle (90) comprises at least one opening (94a, 94b) and/or slot,
with preferably at least one opening (94a, 94b) and/or slot on each side of the motor, and/or
with preferably at least one opening (94a, 94b) and/or slot opening to the upper end of the cradle (90), and/or
with preferably at least one opening (94a, 94b) and/or slot being adapted to accommodate at least one cable and/or harness,
and/or
with preferably at least one opening (94a, 94b) and/or slot being adapted to accommodate at least a part of the bezel assembly (130).

9. The rearview device of claim 8, wherein
at least one cable and/or harness and/or at least a part of the bezel assembly (130), in particular an axle (132), hook and/or tab of the bezel assembly (130), are adapted to be inserted from above into at least one opening (94a, 94b) and/or slot of the cradle (90),
with preferably the cable and/or harness being hold within the opening (94a, 94b) and/or slot by the part of the bezel assembly (130), and/or
with preferably the cable and/or harness being arranged below the part of the bezel assembly (130) within the opening (94a, 94b) and/or slot, and/or
the at least one opening (94a, 94b) and/or slot and the part of the bezel assembly (130) being comprised by the hinge connection.

10. The rearview device of any one of the preceding claims, further comprising
at least one functional module, comprising a light module, in particular in form of a turn signal indicator module (150) and/or a blind spot monitor module, a camera module, a blue tooth module and/or a sensor module, in particular a temperature sensor,
with preferably the attachment of the bezel assembly (130) to the lower case (120) fixing the functional module within the head assembly (200) and/or closing a gap between an upper case (140) and/or the lower case (120) and/or at the bezel assembly (130).

11. The rearview device of any one of the claims 4 to 10, wherein
the cradle (90) comprises at least one tool opening (93a, 93b),
with preferably at least one tool opening (93a, 93b) on each side of the motor, and/or
with preferably at least one tool opening (93a, 93b) opening to the side of the cradle (90), and/or with preferably at least one tool opening (93a, 93b) being adapted to be attached to a tool, in particular in form of a jig, and/or
with preferably at least one tool opening (93a, 93b), in particular 2 opposite tool openings (93a, 93b), defining a rotation axis such that the cradle (90) together with the parts attached thereto can be rotated around the rotation axis, in particular when attached to the tool.

12. The rearview device of any one of the claims 4 to 11, wherein
the seat (92) of the cradle (90) is a spherical seat, being concentrically to the axis of the pivot joint system, and/or
the axis of the pivot joint system is inclined relative to the rotation axis through the at least one tool opening (93a, 93b).

13. Vehicle with at least one rearview device according to any one of the preceding claims.

## Patentansprüche

1. Rückspiegelvorrichtung für ein Fahrzeug, umfassend:
eine bewegliche Kopfanordnung (200);
ein unteres Gehäuse (120, 910);
eine Sockelanordnung (50), die an dem Fahrzeug zu befestigen ist;
eine Aktuatoranordnung (100, 914); und
eine Halterung (90, 912), die dazu ausgestaltet ist, die Aktuatoranordnung (100, 914) an der beweglichen Kopfanordnung (200) anzubringen,
wobei die Rückspiegelvorrichtung ferner eine Halterungsklemme (105, 916) umfasst,
die dazu ausgestaltet ist, die Aktuatoranordnung (100, 914) an die Halterung (90, 912) zu klemmen, wobei
i) entweder die Halterungsklemme (105) umfasst:
• eine oder mehrere Klemmenaussparungen, die dazu ausgestaltet sind, dass ein oder mehrere Klemmenelemente (95) der Halterung (90) in sie eingreifen,
• Klemmenzinken (107), die dazu ausgestaltet sind, durch einen Raum aufgenommen zu werden, der zwischen der Aktuatoranordnung (100) und dem unteren Gehäuse (120) ausgebildet ist, und
• Klemmenklammern (106), die dazu ausgestaltet sind, an entsprechende Merkmale der Halterung (90, 912) geklammert zu werden,
derart, dass die Halterungsklemme (105) durch die Klemmenzinken (107) an ihrem unteren Ende positioniert und/oder verriegelt wird, wenn die Klemmenklammern (106) an ihrem oberen Ende an die Aktuatoranordnung (100) geklemmt werden,
ii) oder die Halterungsklemme (916) umfasst:
• einen oder mehrere Klemmennocken (916a), die dazu ausgestaltet sind, durch einen Raum aufgenommen zu werden, der zwischen der Aktuatoranordnung (914) und der Halterung (912) ausgebildet ist,
• Klemmenzinken (916b), die dazu ausgestaltet sind, durch einen Raum aufgenommen zu werden, der zwischen der Aktuatoranordnung (914) und der Halterung (912) ausgebildet ist,
• Klemmenklammern (916c), die dazu ausgestaltet sind, an entsprechende Merkmale der Halterung (90, 912) geklammert zu werden,
derart, dass die Halterungsklemme (916) durch die Klemmenzinken (916b) an ihrem unteren Ende positioniert und/oder verriegelt wird, wenn die Klemmenklammern (916c) an ihrem oberen Ende an die Aktuatoranordnung (914) geklemmt werden.

2. Rückspiegelvorrichtung nach Anspruch 1, wobei
wenn die Klemmenzinken (916b) dazu ausgestaltet sind, durch einen Raum aufgenommen zu werden, der zwischen der Aktuatoranordnung (914) und der Halterung (912) ausgebildet ist, die Halterung (912) einen Halterungsvorsprung oder mehrere Halterungsvorsprünge (912a) umfasst, der/die dazu geeignet ist/sind, als Reaktion darauf, dass die Halterung (912) an dem unteren Gehäuse (910) angebracht wird, durch eine oder mehrere vertikale Fixierungsbuchsen (910a) des unteren Gehäuses (910) der Kopfanordnung in Eingriff genommen zu werden, und/oder
die Halterung (912) dazu ausgestaltet ist, unter Verwendung einer Dreh- und Schnappverbindungsfähigkeit an dem unteren Gehäuse (910) angebracht zu werden.

3. Rückspiegelvorrichtung nach Anspruch 2, wobei
die Halterung (912) einen Halterungszahn oder mehrere Halterungszähne (912b) umfasst und der eine Halterungszahn oder die mehreren Halterungszähne (912b) dazu ausgestaltet sind, in eine oder mehrere entsprechende Spalte(n) einzugreifen, die in einem Ring der Aktuatoranordnung (914) ausgebildet ist/sind.

4. Rückspiegelvorrichtung nach einem der Ansprüche 1 bis 3, wobei
wenn die Klemmenzinken (107) dazu ausgestaltet sind, durch einen Raum aufgenommen zu werden, der zwischen der Aktuatoranordnung (100) und dem unteren Gehäuse (120) ausgebildet ist,
die Halterung (90) eine oder mehrere Klammern zum Greifen der Aktuatoranordnung (80) und/oder eine oder mehrere Zungen zum Verriegeln der Aktuatoranordnung (80) an der Halterung (90) umfasst.

5. Rückspiegelvorrichtung nach Anspruch 4, wobei
die, vorzugsweise rampenförmigen, Klemmenzinken (107) dazu ausgelegt sind, in einen Raum zwischen der Halterung (90) und dem unteren Gehäuse (120) gedrückt zu werden, wobei vorzugsweise wenigstens eine Klemmenzinke (107) auf jeder Seite des Motors vorliegt, und gedreht zu werden, wenn die Klemmenklammern (106) an dem Motor angebracht werden, wobei vorzugsweise wenigstens eine Klemmenklammer (106) auf jeder Seite des Motors vorliegt, sodass jede Klemmenzinke (107) gegen einen Vorsprung (122) des unteren Gehäuses (120) drückt, wobei vorzugsweise wenigstens ein Vorsprung (122) auf jeder Seite des Motors vorliegt.

6. Rückspiegelvorrichtung nach Anspruch 4 oder 5, ferner umfassend:
eine Einfassungsanordnung (130),
wobei vorzugsweise eine Scharnierverbindung zwischen der Einfassungsanordnung (130) und der Halterung (90) bereitgestellt ist, um eine Drehung der Einfassungsanordnung (90) bezogen auf die Halterung (90) zu erlauben, und/oder
wobei vorzugsweise wenigstens eine Schnapp-, Rast- und/oder Klammerverbindung zwischen der Einfassungsanordnung (130) und dem unteren Gehäuse (120) vorgesehen ist.

7. Rückspiegelvorrichtung nach Anspruch 6, wobei
die Scharnierverbindung zwischen einem oberen Ende der Einfassungsanordnung (130) und einem oberen Ende der Halterung (90) vorgesehen ist, um eine nach unten gerichtete Drehung der Einfassungsanordnung (130) zu erlauben, um die Einfassungsanordnung (130) über die wenigstens eine Schnapp-, Rast- und/oder Klammerverbindung an dem unteren Gehäuse (120) anzubringen.

8. Rückspiegelvorrichtung nach einem der Ansprüche 4 bis 7, wobei
die Halterung (90) wenigstens eine Öffnung (94a, 94b) und/oder einen Schlitz umfasst, wobei vorzugsweise wenigstens eine Öffnung (94a, 94b) und/oder ein Schlitz auf jeder Seite des Motors vorliegt und/oder
wobei vorzugsweise wenigstens eine Öffnung (94a, 94b) und/oder ein Schlitz sich zum oberen Ende der Halterung (90) hin öffnet und/oder
wobei vorzugsweise wenigstens eine Öffnung (94a, 94b) und/oder ein Schlitz dazu ausgelegt ist, wenigstens ein Kabel und/oder einen Kabelbaum aufzunehmen,
und/oder
wobei vorzugsweise wenigstens eine Öffnung (94a, 94b) und/oder ein Schlitz dazu ausgelegt ist, wenigstens einen Teil der Einfassungsanordnung (130) aufzunehmen.

9. Rückspiegelvorrichtung nach Anspruch 8, wobei
wenigstens ein Kabel und/oder Kabelstrang und/oder wenigstens ein Teil der Einfassungsanordnung (130), insbesondere eine Achse (132), ein Haken und/oder eine Zunge der Einfassungsanordnung (130), dazu ausgelegt ist/sind, von oben in wenigstens eine Öffnung (94a, 94b) und/oder einen Schlitz der Halterung (90) eingeführt zu werden,
wobei vorzugsweise das Kabel und/oder der Kabelstrang durch den Teil der Einfassungsanordnung (130) innerhalb der Öffnung (94a, 94b) und/oder des Schlitzes gehalten wird/werden und/oder
wobei vorzugsweise das Kabel und/oder der Kabelstrang unter dem Teil der Einfassungsanordnung (130) innerhalb der Öffnung (94a, 94b) und/oder des Schlitzes angeordnet ist/sind und/oder
die/der wenigstens eine Öffnung (94a, 94b) und/oder Schlitz und der Teil der Einfassungsanordnung (130) in der Scharnierverbindung enthalten sind.

10. Rückspiegelvorrichtung nach einem der vorangehenden Ansprüche, ferner umfassend:
wenigstens ein Funktionsmodul, das ein Lichtmodul, insbesondere in Form eines Fahrtrichtungsanzeigermoduls (150) und/oder eines Totwinkelmonitormoduls, eines Kameramoduls, eines Bluetooth-Moduls und/oder eines Sensormoduls, insbesondere eines Temperatursensors, umfasst,
wobei vorzugsweise die Anbringung der Einfassungsanordnung (130) an dem unteren Gehäuse (120) das Funktionsmodul innerhalb der Kopfbaugruppe (200) befestigt und/oder einen Spalt zwischen einem oberen Gehäuse (140) und/oder dem unteren Gehäuse (120) und/oder an der Einfassungsanordnung (130) schließt.

11. Rückspiegelvorrichtung nach einem der Ansprüche 4 bis 10, wobei
die Halterung (90) wenigstens eine Werkzeugöffnung (93a, 93b) umfasst,
wobei vorzugsweise wenigstens eine Werkzeugöffnung (93a, 93b) auf jeder Seite des Motors vorliegt und/oder
wobei vorzugsweise wenigstens eine Werkzeugöffnung (93a, 93b) sich zur Seite der Halterung (90) hin öffnet und/oder
wobei vorzugsweise wenigstens eine Werkzeugöffnung (93a, 93b) dazu ausgelegt ist, an einem Werkzeug, insbesondere in Form einer Einspannvorrichtung, angebracht zu werden, und/oder
wobei vorzugsweise wenigstens eine Werkzeugöffnung (93a, 93b), insbesondere 2 gegenüberliegende Werkzeugöffnungen (93a, 93b), eine Drehachse derart definieren, so dass die Halterung (90) zusammen mit den daran angebrachten Teilen um die Drehachse gedreht werden kann, insbesondere, wenn sie an dem Werkzeug angebracht ist.

12. Rückspiegelvorrichtung nach einem der Ansprüche 4 bis 11, wobei
die Aufnahme (92) der Halterung (90) eine kugelförmige Aufnahme ist, die mit der Achse des Schwenkgelenksystems konzentrisch ist, und/oder
die Achse des Schwenkgelenksystems bezogen auf die durch die wenigstens eine Werkzeugöffnung (93a, 93b) verlaufende Drehachse geneigt ist.

13. Fahrzeug mit wenigstens einer Rückspiegelvorrichtung nach einem der vorangehenden Ansprüche.

## Revendications

1. Dispositif de rétroviseur pour un véhicule, comprenant :
un ensemble à tête mobile (200) ;
un boîtier inférieur (120, 910) ;
un ensemble de base (50) à fixer au véhicule ;
un ensemble d'actionneur (100, 914) ; et
un support (90, 912) conçu pour attacher l'ensemble d'actionneur (100, 914) à l'ensemble à tête mobile (200),
dans lequel
le dispositif de rétroviseur comprend en outre une pince de support (105, 916) conçue pour serrer l'ensemble d'actionneur (100, 914) sur le support (90, 912), dans lequel
i) soit la pince de support (105) comprend
• un ou plusieurs évidements de pince conçus pour être engagés par un ou plusieurs éléments de pince (95) du support (90),
• des broches de pince (107) conçues pour être reçues par un espace formé entre l'ensemble d'actionneur (100) et le boîtier inférieur (120), et
• des attaches de pince (106) conçues pour s'attacher sur des caractéristiques correspondantes du support (90, 912),
de telle sorte que la pince de support (105) soit positionnée et/ou verrouillée par les broches de pince (107) au niveau de son extrémité inférieure lors du serrage des attaches de pince (106) au niveau de son extrémité supérieure sur l'ensemble d'actionneur (100),
ii) soit la pince de support (916) comprend
• une ou plusieurs cames de pince (916a) conçues pour être reçues par un espace formé entre l'ensemble d'actionneur (914) et le support (912),
• des broches de pince (916b) conçues pour être reçues par un espace formé entre l'ensemble d'actionneur (914) et le support (912),
• des attaches de pince (916c) conçues pour s'attacher sur des caractéristiques correspondantes du support (90, 912),
de telle sorte que la pince de support (916) soit positionnée et/ou verrouillée par les broches de pince (916b) au niveau de son extrémité inférieure lors du serrage des attaches de pince (916c) au niveau de son extrémité supérieure sur l'ensemble d'actionneur (914).

2. Dispositif de rétroviseur selon la revendication 1, dans lequel,
avec les broches de pince (916b) qui sont conçues pour être reçues par un espace formé entre l'ensemble d'actionneur (914) et le support (912), le support (912) comprend une ou plusieurs saillies de support (912a), qui sont appropriées à être engagées par une ou plusieurs pattes de fixation verticales (910a) du boîtier inférieur (910) de l'ensemble de tête en réponse au support (912) qui est attaché au boîtier inférieur (910), et/ou
le support (912) est conçu pour s'attacher au boîtier inférieur (910) à l'aide d'une connectivité par rotation et enclenchement.

3. Dispositif de rétroviseur selon la revendication 2, dans lequel
le support (912) comprend une ou plusieurs dents de support (912b) et la ou plusieurs dents de support (912b) sont conçues pour s'engager dans un ou plusieurs trous correspondants formés dans une bague de l'ensemble d'actionneur (914).

4. Dispositif de rétroviseur selon l'une quelconque de la revendications 1 à 3, dans lequel, avec les broches de pince (107) qui sont conçues pour être reçues par un espace formé entre l'ensemble d'actionneur (100) et le boîtier inférieur (120),
le support (90) comprend une ou plusieurs attaches pour saisir l'ensemble d'actionneur (80) et/ou une ou plusieurs languettes pour verrouiller l'ensemble d'actionneur (80) sur le support (90).

5. Dispositif de rétroviseur selon la revendication 4, dans lequel
les broches de pince (107), de préférence en forme de rampe, sont adaptées à être poussées dans un espace entre le support (90) et le boîtier inférieur (120), avec de préférence au moins une broche de pince (107) de chaque côté du moteur, et à être tournées lorsque les attaches de pince (106) sont attachées sur le moteur, avec de préférence au moins une attache de pince (106) de chaque côté du moteur, de sorte que chaque broche de pince (107) pousse contre une saillie (122) du boîtier inférieur (120), avec de préférence au moins une saillie (122) de chaque côté du moteur.

6. Dispositif de rétroviseur selon la revendication 4 ou 5, comprenant en outre un ensemble de lunette (130),
avec de préférence une liaison à charnière qui est prévue entre l'ensemble de lunette (130) et le support (90) pour permettre une rotation de l'ensemble de lunette (90) par rapport au support (90), et/ou
avec de préférence au moins une liaison par enclenchement, loquet et/ou attache qui est prévue entre l'ensemble de lunette (130) et le boîtier inférieur (120).

7. Dispositif de rétroviseur selon la revendication 6, dans lequel
la liaison à charnière est prévue entre une extrémité supérieure de l'ensemble de lunette (130) et une extrémité supérieure du support (90) pour permettre une rotation vers le bas de l'ensemble de lunette (130) afin d'attacher l'ensemble de lunette (130) sur le boîtier inférieur (120) par au moins la liaison par enclenchement, loquet et/ou attache.

8. Dispositif de rétroviseur selon l'une quelconque des revendications 4 à 7, dans lequel le support (90) comprend au moins une ouverture (94a, 94b) et/ou fente,
avec de préférence au moins une ouverture (94a, 94b) et/ou fente de chaque côté du moteur, et/ou
avec de préférence au moins une ouverture (94a, 94b) et/ou fente ouvrant vers l'extrémité supérieure du support (90), et/ou
avec de préférence au moins une ouverture (94a, 94b) et/ou fente qui est adaptée à loger au moins un câble et/ou harnais,
et/ou
avec de préférence au moins une ouverture (94a, 94b) et/ou fente qui est adaptée à loger au moins une partie de l'ensemble de lunette (130).

9. Dispositif de rétroviseur selon la revendication 8, dans lequel
au moins un câble et/ou harnais et/ou au moins une partie de l'ensemble de lunette (130), en particulier un axe (132), un crochet et/ou une languette de l'ensemble de lunette (130), sont adaptés à être insérés par le dessus dans au moins une ouverture (94a, 94b) et/ou fente du support (90),
avec de préférence le câble et/ou harnais qui est retenu à l'intérieur de l'ouverture (94a, 94b) et/ou de la fente par la partie de l'ensemble de lunette (130), et/ou
avec de préférence le câble et/ou harnais qui est agencé en dessous de la partie de l'ensemble de lunette (130) à l'intérieur de l'ouverture (94a, 94b) et/ou de la fente, et/ou au moins l'ouverture (94a, 94b) et/ou la fente et la partie de l'ensemble de lunette (130) étant comprises par la liaison à charnière.

10. Dispositif de rétroviseur selon l'une quelconque des revendications précédentes, comprenant en outre
au moins un module fonctionnel, comprenant un module d'éclairage, en particulier sous la forme d'un module de témoin de clignotant (150) et/ou d'un module de surveillance d'angles morts, d'un module de caméra, d'un module Bluetooth et/ou d'un module de capteur, en particulier d'un capteur de température,
avec de préférence la fixation de l'ensemble de lunette (130) au boîtier inférieur (120) fixant le module fonctionnel à l'intérieur de l'ensemble de tête (200) et/ou fermant un trou entre un boîtier supérieur (140) et/ou le boîtier inférieur (120) et/ou au niveau de l'ensemble de lunette (130).

11. Dispositif de rétroviseur selon l'une quelconque des revendications 4 à 10, dans lequel le support (90) comprend au moins une ouverture d'outil (93a, 93b),
avec de préférence au moins une ouverture d'outil (93 a, 93b) de chaque côté du moteur, et/ou
avec de préférence au moins une ouverture d'outil (93 a, 93b) ouvrant vers le côté du support (90), et/ou
avec de préférence au moins une ouverture d'outil (93a, 93b) qui est adaptée à être fixée à un outil, en particulier sous la forme d'un gabarit, et/ou
avec de préférence au moins une ouverture d'outil (93a, 93b), en particulier deux ouvertures d'outil opposées (93a, 93b), définissant un axe de rotation de telle sorte que le support (90) conjointement avec les parties fixées à celui-ci puissent tourner autour de l'axe de rotation, en particulier lorsqu'il est fixé à l'outil.

12. Dispositif de rétroviseur selon l'une quelconque des revendications 4 à 11, dans lequel le siège (92) du support (90) est un siège sphérique, qui est concentrique par rapport à l'axe du système d'assemblage pivotant, et/ou
l'axe du système d'assemblage pivotant est incliné par rapport à l'axe de rotation à travers au moins l'ouverture d'outil (93a, 93b).

13. Véhicule avec au moins un dispositif de rétroviseur selon l'une quelconque des revendications précédentes.
